# EUROPÄISCHE PATENTANMELDUNG

(11) **EP 0 830 979 A1**
(43) Veröffentlichungstag der Anmeldung: **25.03.1998**
(21) Anmeldenummer: 97113538.9
(22) Anmeldetag: 06.08.1997
(51) Int. Cl.: B60P 7/13

(54) **Verriegelungsvorrichtung an Fahrzeugen für Container**

(30) Priorität: 20.09.1996 DE 19638471
(71) Anmelder: Schneider Fahrzeug- und Containertechnik GmbH, 33649 Bielefeld (DE)
(72) Erfinder: Schneider, Horst, 33649 Bieleveld (DE); Schneider, Thomas, 33659 Bieleveld (DE); Wenningkamp, Michael, 33129 Delbrück (DE)
(74) Vertreter: Thielking, Bodo, Dipl.-Ing.

(57) **Zusammenfassung**

Eine Verriegelungsvorrichtung an Fahrzeugen für Container mit einem fahrzeugfesten Gehäuseteil (1) weist einen Spannbolzen (2) mit einem Spannkopf (2a) auf, der in unterschiedliche Höhenpositionen verfahrbar und mit dem Spannkopf (2a) durch Anziehen des Spannbolzens (2) gegen eine Anlagefläche (30a) des Containers (30) spannbar ist. Am Spannbolzen (2) ist ein Spannelement (4) schwenkbar um eine Schwenkachse (4c) gelagert, die quer zur Längsachse (2b) des Spannbolzens (2) verläuft. Das Spannelement (4) weist eine gegenüber der Schwenkachse (4c) unrunde Spannfläche (4d), die zur Anlage an einer fahrzeugfesten Gegenfläche ausgebildet ist.

## Beschreibung

Die Erfindung betrifft eine Verriegelungsvorrichtung nach dem Oberbegriff des Anspruchs 1.

Derartige Verriegelungsvorrichtungen befinden sich in der Regel an vier Eckpunkten von Behältertragfahrzeugen. Dabei sind zwei Arten von Verriegelungsvorrichtungen bekannt. Bei einer ersten Art ist der Spannbolzen in seiner Ausgangslage fixiert, in einer zweiten Ausführungsform ist der Spannbolzen nach unten absenkbar. Die Absenkbarkeit ist in solchen Fällen wesentlich, in denen auf Standfüßen stehende Wechselcontainer von dem transportierten Lkw mit den Verriegelungsvorrichtungen unterfahren werden müssen.

Bei einer ersten bekannten Lösung sind die Spannbolzen mit Gewinde versehen. Das Verspannen erfolgt mittels einer Spannmutter. Eine derartige Ausführungsform mit Gewinde und Spannmutter ist nachteilig, weil die Gewinde im groben Betrieb leicht verschmutzen und schnell abnutzen. Dies führt zu einem Festsetzen der Mutter auf dem Gewindebolzen. Aus Zeitmangel oder Nachlässigkeit werden die Muttern häufig nicht geschlossen.

Die Lösung mit einer Spannmutter erfüllt die in Deutschland maßgeblichen gesetzlichen Vorgaben, die fordern, daß eine form- und kraftschlüssige Verspannung des Verriegelungselements in jedem Fahrzustand erreicht werden kann.

Statt dessen ist es auch bekannt, den Verriegelungsbolzen mit dem Spannkopf zum Fixieren gegenüber der Einsetzlage nur um einen bestimmten Winkelbetrag, beispielsweise 90° oder auch nur 70° zu verdrehen.

Eine derartige Verriegelungsvorrichtung, bei der der Verriegelungsbolzen mittels eines Handhebels um die Bolzenlängsachse verschwenkt wird, erfüllt nicht die in Deutschland und einigen anderen Staaten maßgeblichen gesetzlichen Vorschriften, die fordern, daß ein sicherer Form- und Kraftschluß erreicht werden kann. Für ein sicheres Öffnen und Schließen der Verriegelung unter allen Betriebsbedingungen ist es jedoch erforderlich, daß erhebliche Toleranzen zwischen Behälter und Fahrzeug berücksichtigt werden müssen, weil sich sonst die Verriegelungsvorrichtungen nicht schließen lassen. Die zwingend vorzusehenden Toleranzen haben jedoch die zwangsläufige Folge, daß eine spielfreie Verbindung nicht hergestellt werden kann, insbesondere können nicht unterschiedliche Bodenstärken der Behälterbeschläge gespannt werden.

Ausgehend von diesem Stand der Technik liegt der Erfindung die Aufgabe zugrunde, eine Verriegelungsvorrichtung zu schaffen, welche die Nachteile der bekannten Verriegelungsvorrichtungen vermeidet und eine schnelle, sichere und allen gesetzlichen Vorschriften entsprechende Verbindung zwischen dem Fahrzeug und dem Container ermöglicht, wobei auch unterschiedliche Bodenstärken der Behälterbeschläge, die mit der Verriegelungsvorrichtung zusammenwirken, spannbar sein sollen.

Die Lösung dieser Aufgabe erfolgt mit den Merkmalen des Kennzeichnungsteils von Anspruch 1. Bevorzugte Ausgestaltungen der Erfindung ergeben sich aus den Unteransprüchen.

Die erfindungsgemäße Verriegelungsvorrichtung erlaubt eine schnelle und sichere Verspannung, ohne die Nachteile einer Schraubmutterverspannung aufzuweisen. Die Verriegelungsvorrichtung kann sowohl mit in seiner Ausgangslage in der Höhe fixiertem Spannbolzen als auch mit absenkbarem Spannbolzen bzw. Spannkopf ausgeführt werden.

Nachstehend werden bevorzugte Ausführungsformen der Erfindung anhand der Zeichnung im einzelnen beschrieben. Es zeigen:
- Figur 1 -: einen vertikalen Schnitt entlang einer durch die Mittelachse des Spannbolzens gelegten Schnittebene, wobei im rechten Figurenbereich die angehobene Position und im linken Figurenbereich die abgesenkte Position dargestellt ist,
- Figur 2 -: einen horizontalen Schnitt entlang Ebene II-II in Figur 1 in angehobener Position des Spannbolzens,
- Figur 3 -: einen horizontalen Schnitt entlang Ebene III-III in Figur 1 bei angehobenem Spannbolzen,
- Figur 4 -: einen horizontalen Schnitt entlang Ebene IV-IV in Figur 1 bei angehobenem Spannbolzen,
- Figur 5 -: eine vollständige Schnittdarstellung der in Figur 1 gezeigten Verriegelungsvorrichtung bei abgesenktem Spannbolzen mit Blickrichtung von der Gegenseite gem. Fig. 1,
- Figur 6 -: eine vertikale Schnittzeichnung durch eine zweite Ausführungsform,
- Figur 7 -: eine vertikale Schnittzeichnung durch eine dritte Ausführungsform,
- Figur 8 -: eine Unteransicht auf das Gehäuse,
- Figur 9 -: eine teilweise geschnittene Seitenansicht der Verriegelungsvorrichtung,
- Figur 10 -: die Darstellung gemäß Figur 9 in einer zweiten Spannstellung, in der ein dickeres Behälterbeschlagblech gespannt wird.

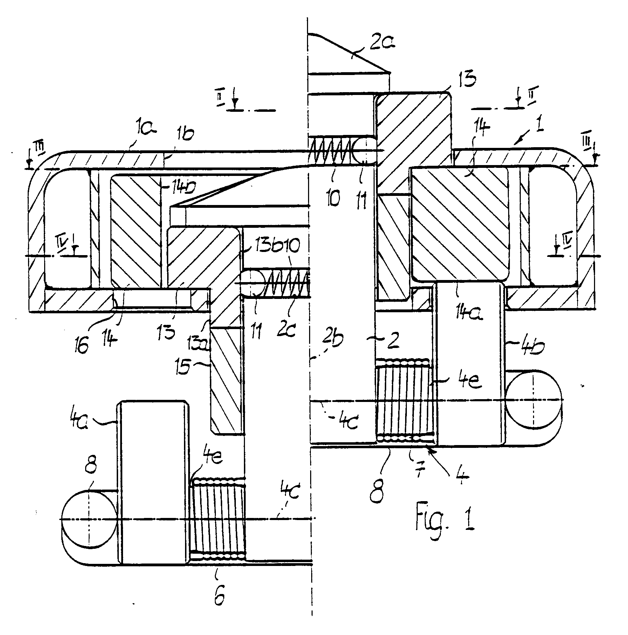

In den verschiedenen Darstellungen sind gleiche oder einander entsprechende Teile jeweils mit gleichen Bezugszeichen versehen. Die grundsätzliche Beschreibung erfolgt im wesentlichen anhand der Ausführungsform gemäß Figuren 1 bis 4:

Ein mit 1 bezeichnetes Gehäuseteil ist fahrzeugfest montiert. Es besitzt eine obere Auflagefläche 1a. In der oberen Auflagefläche 1a bzw. dem diese Auflagefläche bildenden Blech ist eine unrunde Aussparung 1b vorgesehen.

Durch die Aussparung 1b greift das Oberteil einer Führungsbuchse 13, die in ihrem oberen Bereich eine am Umfang unrunde Außenkontur aufweist. In ihrem unteren Bereich besitzt die Führungsbuchse 13 einen runden Führungsbund 13a.

Die Führungsbuchse 13 wird von einer Nutenbuchse 14 umschlossen. Die Nutenbuchse 14 besitzt eine unrunde Innenausnehmung 14b, deren Innenkontur mit der Außenkontur der Führungsbuchse 13 korrespondiert. Die Konturen von Führungsbuchse 13 und Nutenbuchse 14 sind so gewählt, daß die Führungsbuchse 13 in einer ersten Position (Fig. 1 rechter Bereich) auf der Nutenbuchse 14 aufliegt und in einer zweiten Position (Fig. 1 linker Bereich) in die Nutenbuchse 14 derart abgetaucht ist, daß der Spannkopf 2a eines Spannbolzens unterhalb der Auflagefläche 1a des Gehäuseteils 1 liegt. Die abgesenkte Lage wird durch Verdrehen der Nutenbuchse 14 mittels des Handgriffs 14a um 90° erreicht. Die unterschiedlichen Höhenlagen entsprechen also zwei unterschiedlichen, jeweils um 90° zueinander versetzten Schwenkpositionen der Nutenbuchse und des Spannbolzens 2. Das Anheben des Spannbolzens in die gemäß Figur 1 rechte Position erfolgt mittels einer Distanzbuchse 15.

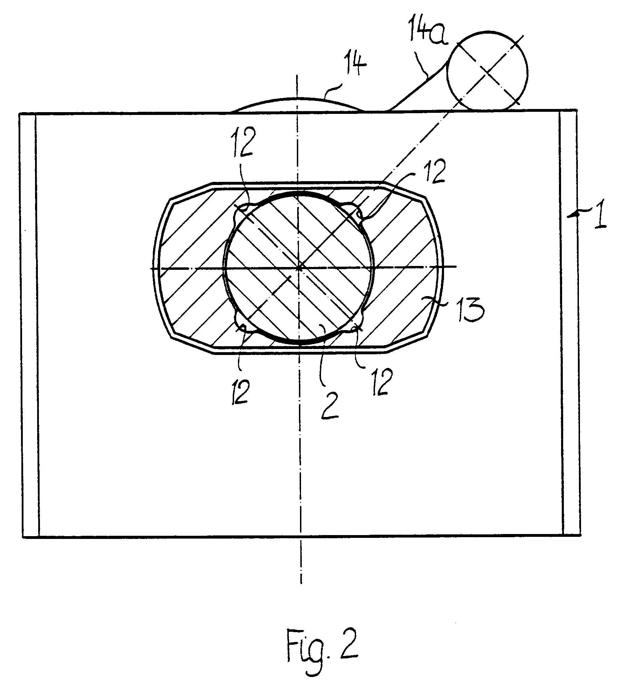

Der Spannbolzen 2 mit dem Spannkopf 2a ist in der Führungsbuchse in jeweils um 90° versetzten Schwenkpositionen verrastbar. Die Verrastung erfolgt mittels federbelasteter Kugeln 11, welche von einer Druckfeder 10 beaufschlagt werden, die eine Querbohrung 2c des Spannbolzens 2 quer durchsetzt. In Raststellung greifen die federbelasteten Kugeln 11 in zueinander und achsparallel angeordnete Rastnuten 12 (vgl. Fig. 2).

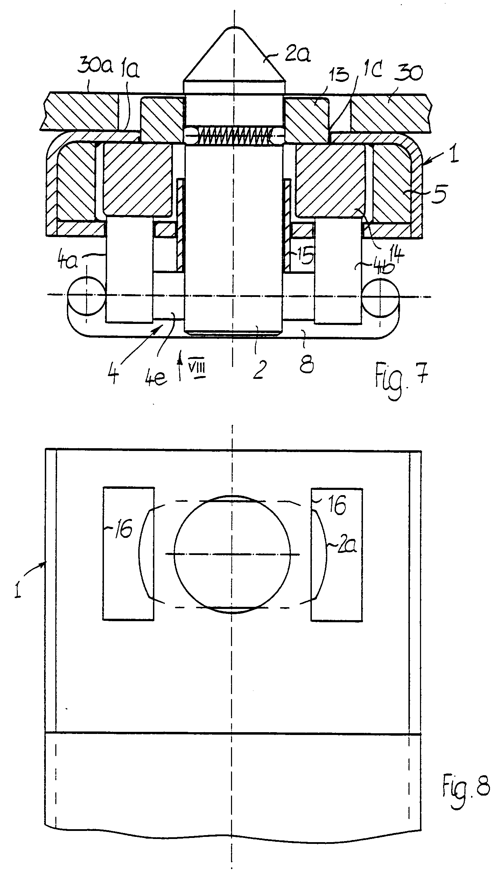

Im Boden des Gehäuseteils 1 befinden sich zwei Durchbrüche 16 (vgl. z.B. Fig. 8).

Der Spannbolzen 2 weist eine Querbohrung auf und wird von einer Spannwelle 4e quer durchsetzt. An der Spannwelle 4e ist ein Betätigungsgriff 8 befestigt. Auf der Spannwelle 4e befinden sich mit der Spannwelle 4e und mit dem Betätigungsgriff 8 fest verbundene Spannocken 4a und 4b. Die Spannwelle 4e wird von zwei Spannfedern 6 und 7 umschlossen, welche als Schraubenfedern ausgebildete Torsionsfedern sind. Die Spannfedern 6 und 7 stützen sich mit einem Ende am Spannbolzen 2 und andererseits am Spannelement 4 ab. Mit 4 ist das gesamte Spannelement bezeichnet, welches aus Spannwelle 4e, Spannocken 4a und 4b und Handgriff besteht.

Der Spannbolzen 2 ist um seine vertikale Längsachse 2b verschwenkbar. In der Spannstellung liegen die Umfangsflächen der Spannocken 4a und 4b an der Unterseite 14a der Nutenbuchse 14 an, die sich mit ihrer Oberseite an dem gehäusefesten Teil 1 abstützt. Aufgrund der Exzentrizität der Spannocken 4a und 4b wird ein nach unten wirkender Zug auf den Spannbolzen 2 und den Spannkopf 2a ausgeübt.

Eine Hülse 15 dient zum Anheben der Führungsbuchse 13 und des Spannbolzens 2.

Das Verschwenken der Nutenbuchse 14 erfolgt mittels eines Handgriffs 14a.

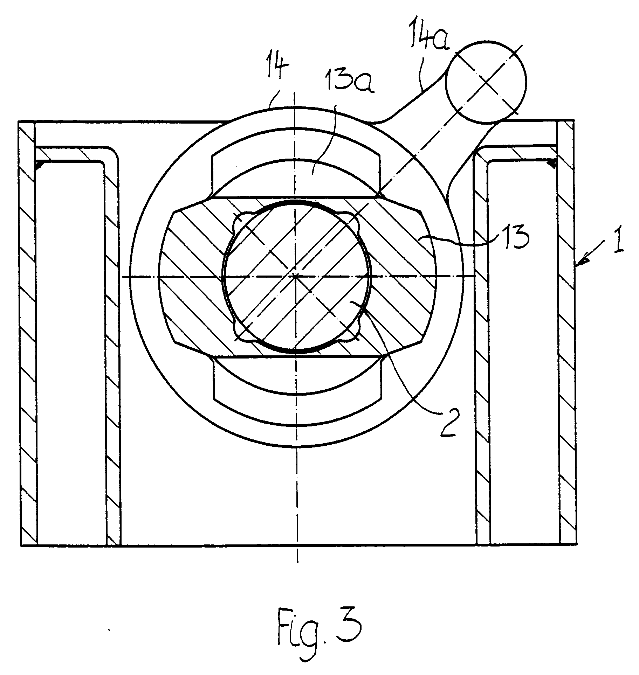

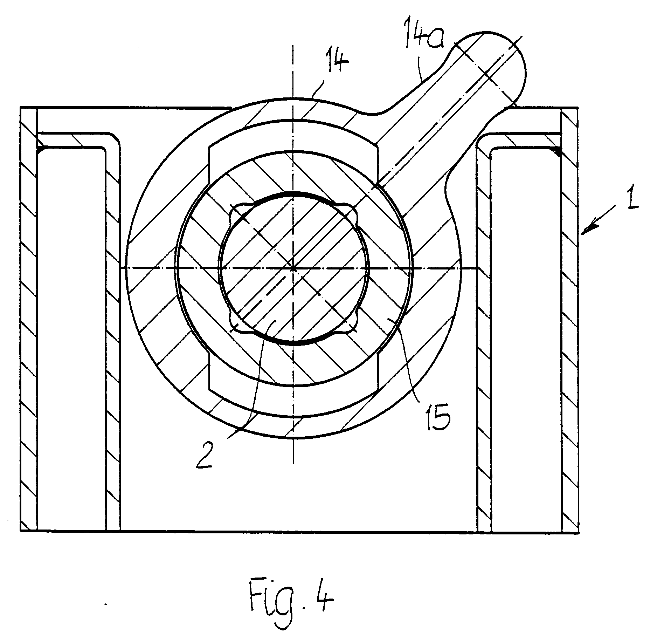

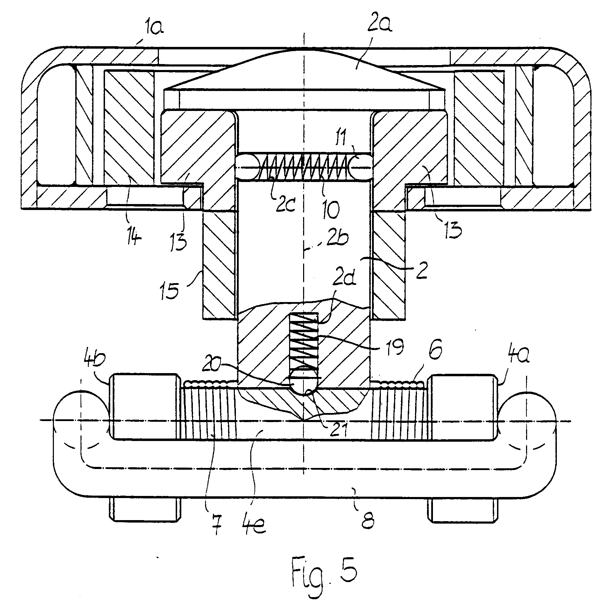

Aus Figur 5 ist ersichtlich, daß der Spannbolzen 2, der von der Schwenkwelle 4e durchsetzt wird, eine zentrale vertikale Bohrung 2d aufweist, in der sich eine Druckfeder 19 abstützt, die auf eine Rastkugel 20 einwirkt. Die Rastkugel 20 greift in eine Rastausnehmung 21 in der Schwenkwelle 4e ein. Durch die so gebildete Rastvorrichtung gibt es eine bevorzugte Rastposition der Schwenkwelle 4e.

Die Spannfedern 6 und 7 sind so ausgelegt, daß sie die durch die Rastfeder 19 bewirkte Rastung bei Fahrzeugbewegungen auf jeden Fall überwindet mit der Folge, daß die Schwenkwelle stets in Spannstellung angezogen wird.

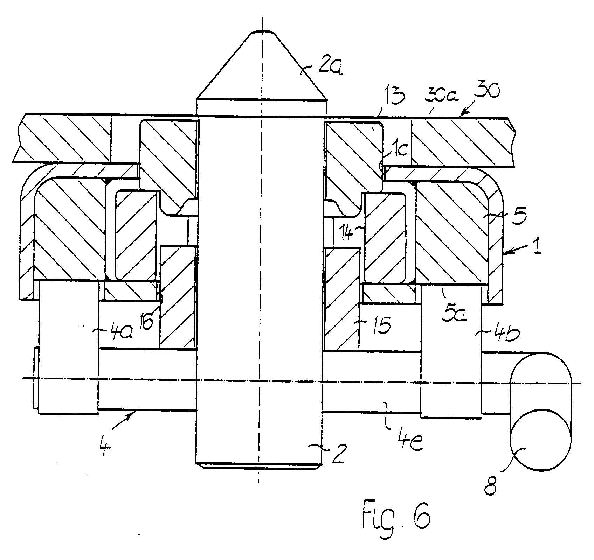

Bei der Ausführungsform gemäß Figur 6 stützen sich die Spannocken 4a und 4b an einem gehäusefesten Teil 5 ab, das fest mit dem gehäusefesten Teil 1 verschweißt ist.

Figur 7 zeigt wiederum eine Ausführungsform ähnlich gemäß Figur 1, bei der die Rastnocken 4a und 4b sich an der Unterseite der Nutbuchse 14 abstützen, die sich ihrerseits gegen die Unterseite des gehäusefesten und fahrzeugfesten Blechs anlegt, das auf seiner Oberseite eine obere Auflagefläche 1a für das Spannblech 30a des Containers bildet. Der Spannkopf 2a des Spannbolzens liegt auf der Oberseite 30a des Spannblechs 30 an.

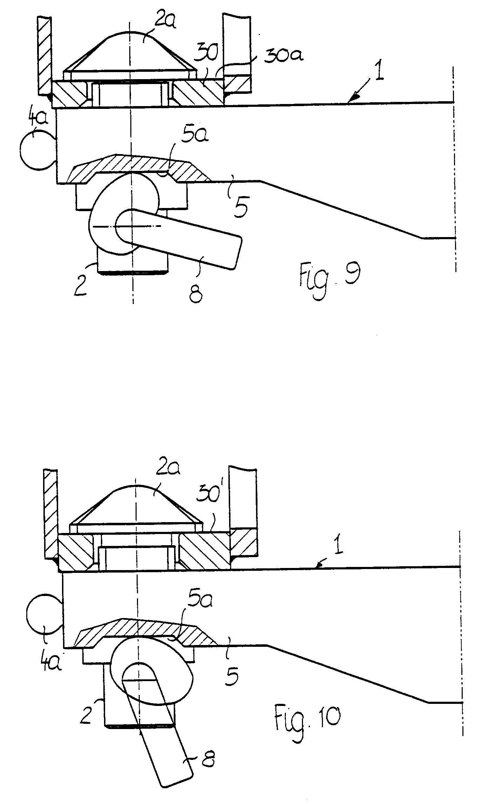

Aus Figuren 9 und 10 ist ersichtlich, daß der Handgriff 8 bei unterschiedlichen Dicken der Bleche 30 in Figur 9 bzw. 30' in Figur 10 eine unterschiedliche Schwenkstellung einnimmt. Die Spannocken 4a und 4b stützen sich auf der gehäuseteilfesten Fläche 5a eines Gehäuseteils 5 ab, das fest mit einem Gehäuseteil 1 verbunden ist.

## Patentansprüche

1. Verriegelungsvorrichtung an Fahrzeugen für Container, mit einem fahrzeugfesten Gehäuseteil (1), in dem ein Spannbolzen (2) mit einem Spannkopf (2a) in unterschiedliche Höhenpositionen verfahrbar und mit dem Spannkopf (2a) durch Anziehen des Spannbolzens (2) gegen eine Anlagefläche (30a) des Containers (30) spannbar ist,
dadurch gekennzeichnet,
daß am Spannbolzen (2) ein Spannelement (4) schwenkbar um eine Schwenkachse (4c) verläuft, die quer zur Längsachse (2b) des Spannbolzens (2) verläuft, wobei das Spannelement (4) eine gegenüber der Schwenkachse (4c) unrunde Spannfläche (4d) aufweist, die zur Anlage an einer fahrzeugfesten Gegenfläche ausgebildet ist.

2. Verriegelungsvorrichtung nach Anspruch 1,
dadurch gekennzeichnet,
daß das Spannelement (4) eine Schwenkwelle (4e) aufweist, welche den Spannbolzen (2) quer durchsetzt.

3. Verriegelungsvorrichtung nach Ansprüchen 1 und 2,
dadurch gekennzeichnet,
daß die Schwenkwelle (4e) mindestens einen Spannocken (4a; 4b) trägt, dessen Umfangsfläche als Spannfläche und zur Anlage an eine fahrzeugfeste Gegenfläche (5a; 14a) ausgebildet ist.

4. Verriegelungsvorrichtung nach Anspruch 3,
dadurch gekennzeichnet,
daß die Schwenkwelle (4a) mit ihrem Zentrum den Spannbolzen (2) quer durchsetzt und an ihren Enden jeweils einen Spannocken (4a; 4b) trägt.

5. Verriegelungsvorrichtung nach einem oder mehreren der Ansprüche 1 bis 4,
dadurch gekennzeichnet,
daß am Spannelement (4) mindestens eine Spannfeder (6; 7) angreift, welche die Spannfläche (4d) des Spannelements (4) in Spannrichtung beaufschlagt.

6. Verriegelungsvorrichtung nach Anspruch 5,
dadurch gekennzeichnet,
daß die Spannfeder (6; 7) eine als Schraubenfeder ausgebildete, vorgespannte Torsionsfeder ist, die die Schwenkwelle (4e) umschließt und sich einerseits am Spannbolzen (2) sowie andererseits am Spannelement (4) abstützt.

7. Verriegelungsvorrichtung nach einem oder mehreren der Ansprüche 1 bis 6,
dadurch gekennzeichnet,
daß am Spannelement (4) ein Betätigungsgriff (8) befestigt ist.

8. Verriegelungsvorrichtung nach einem oder mehreren der Ansprüche 1 bis 7,
dadurch gekennzeichnet,
daß der Spannkopf (2a) des Spannbolzens (2) in eine Position absenkbar ist, in der er benachbart zu der von einer oberen Auflagefläche (1a) bestimmten Ebene eines fahrzeugfesten Gehäuseteils (1) liegt.

9. Verriegelungsvorrichtung nach Anspruch 1,
dadurch gekennzeichnet,
daß der Spannkopf (2a) bündig mit oder unterhalb der durch die obere Auflagefläche (1a) bestimmten Ebene liegt.

10. Verriegelungsvorrichtung nach einem oder mehreren der Ansprüche 1 bis 9,
dadurch gekennzeichnet,
daß das gehäusefeste Teil (1) eine in einer ersten Schwenklage den Durchtritt des Spannkopfs (2a) zulassende und in einer dazu unterschiedlichen Schwenklage eine Auflage des Spannkopfes bildende Durchgangsöffnung (1c) aufweist.

11. Verriegelungsvorrichtung nach Anspruch 10,
dadurch gekennzeichnet,
daß die beiden Schwenklagen um 90° zueinander versetzt und über Rastmittel (10; 11; 12) vorgegeben sind.

12. Verriegelungsvorrichtung nach einem oder mehreren der Ansprüche 1 bis 11,
dadurch gekennzeichnet,
daß der Spannbolzen (2) unterhalb des Spannkopfes (2a) von einer außen unrunden Führungsbuchse (13) umschlossen ist, die eine am Umfang unrunde Außenkontur aufweist, wobei diese Führungsbuchse in einer um eine vertikale Achse (2b) schwenkbar im Gehäuse (1) angeordneten und mit einem Schwenkgriff versehenen Nutenbuchse (14) höhenverstellbar verschiebbar ist, wobei die unrunde Außenkontur der Führungsbuchse (13) mit einer dazu derart korrespondierenden unrunden Innenausnehmung der Nutenbuchse (14) korrespondiert, daß die Führungsbuchse (13) sich in einer ersten Schwenklage in angehobener Position auf der Nutenbuchse (14) abstützt und in einer dazu verschwenkten zweiten Position in der Nutenbuchse (14) abgesenkt liegt.

13. Verriegelungsvorrichtung nach Anspruch 12,
dadurch gekennzeichnet,
daß in Draufsicht von oben die Außenkontur des Spannkopfes (2a), die Außenkontur der Führungsbuchse (13) und die Innenkontur der Öffnung der Nutenbuchse (14) einander im wesentlichen entsprechen.

14. Verriegelungsvorrichtung nach einem oder mehreren der Ansprüche 1 bis 13,
dadurch gekennzeichnet,
daß die Schwenkwelle (4e) am Spannbolzen (2) über eine Rastvorrichtung (19, 20, 21) in einer vorgegebenen Schwenklage verrastbar sind.
